# EUROPEAN PATENT APPLICATION

(11) **EP 2 163 989 A1**
(43) Date of publication of application: **17.03.2010**
(21) Application number: 08773079.2
(22) Date of filing: 02.07.2008
(51) Int. Cl.: G06F 12/00

(54) **A METHOD AND DEVICE FOR DATA SYNCHRONIZATION AMONG TERMINALS**

(30) Priority: 02.07.2007 CN 200710118216
(71) Applicant: Huawei Technologies Co., Ltd., Longgang District Shenzhen Guangdong 518129 (CN)
(72) Inventor: YANG, Jian, 518129, Shenzhen (CN); WANG, Lei, 518129, Shenzhen (CN); CHEN, Guoqiao, 518129, Shenzhen (CN)
(74) Representative: Kreuz, Georg Maria
(86) International application number: PCT/CN2008/071518
(87) International publication number: WO 2009/003414

(57) **Abstract**

A method and apparatus for synchronizing data between terminals are disclosed. The method includes these steps: a user sends data to a server through a terminal that corresponds to a certain access mode; the server sends a notification message to terminals that correspond to other access modes of the user, and the terminals that correspond to other access modes obtain the data through the server. The apparatus includes a data receiving module, a notification message sending module, and a data sending module. The present invention may enable terminals that correspond to other access modes of the user to know the data status of the server and perform data synchronization in time after the user sends data to the server through a terminal that corresponds to a certain access mode.

## Description

### Field of the Invention

The present invention relates to the communication field, and in particular, to a method and apparatus for synchronizing data between terminals.

### Background of the Invention

Now the society is an information society. A user can receive and send information through a mobile device, or execute application programs on the mobile device. The preceding data interaction and application program execution results need to be stored on the mobile device, and be consistent with the same type of data on other devices. For example, if a phonebook is stored on a mobile phone and a personal digital assistant (PDA), a same phonebook needs to be stored on personal computers (PC) or notebooks in the office and at home. People all hope that the phonebook information can be consistent on these devices. When the phonebook information is changed on a device, the phonebook information needs to be updated on other devices; that is, data synchronization needs to be performed.

A personal information management (PIM) server may provide multiple access modes, so that the user can interact with the PIM server to perform data maintenance and operation through multiple terminals corresponding to these access modes. For example, the user may interact with the PIM server over a dialed service (DS) protocol through a mobile terminal to synchronize the local phonebook to the PIM server, or interact with the PIM server through a PC client, or interact with the PIM server through a world wide web (web) terminal.

A method for synchronizing data between terminals in the prior art is as follows: A user connects to a PIM server through a terminal corresponding to a certain access mode, and interacts with the PIM server to back up the phonebook information of the user on the PIM server on a synchronized basis. When the user connects to the PIM server through terminals corresponding to other access modes, and finds that the phonebook information stored on the terminal is inconsistent with that on the PIM server, the terminal interacts with the PIM server to obtain the phonebook information from the PIM server, and updates the local phonebook information, thus synchronizing the data between terminals.

During the implementation of the present invention, the inventor discovers that the method in the prior art has the following weaknesses: When a user interacts with the PIM server through a terminal corresponding to an access mode to update data on the PIM server, terminals corresponding to other access modes of the user fail to synchronize the data in time.

### Summary of the Invention

Embodiments of the present invention provide a method and an apparatus for synchronizing data between terminals so that data can be synchronized between terminals corresponding to all access modes of a user in time.

To achieve the above objective, an embodiment of the present invention provides a method for synchronizing data between terminals. The method includes:

receiving, by a server, data that a user sends through a terminal corresponding to a certain access mode; and

by the server, sending a notification message to other terminals of the user, and providing other terminals with the data.

Another embodiment of the present invention provides an apparatus for synchronizing data between terminals. The apparatus includes:

a data receiving module, adapted to receive data that a user sends to a server through a terminal corresponding to a certain access mode;

a notification message sending module, adapted to send a notification message to other terminals of the user when the user connects to the server through other terminals; and

a data sending module, adapted to send data that the data receiving module receives to terminals corresponding to other access modes of the user.

Compared with the prior art, embodiments of the present invention have the following merits: Embodiments of the present invention send a notification message to terminals of a user to instruct these terminals to perform data synchronization. Thus, when the user sends data to a server through a terminal corresponding to a certain access mode, terminals corresponding to other access modes of the user can know the data status of the server and perform data synchronization in time.

### Brief Description of the Drawings

FIG. 1 is flowchart of a method provided in an embodiment of the present invention;

FIG. 2 shows a process on a PIM server where a user updates PIM data in an embodiment of the present invention;

FIG. 3 shows a process of data synchronization on the PIM server when a user re-logs in to the PIM server through terminals corresponding to other access modes in an embodiment of the present invention; and

FIG. 4 shows a structure of an apparatus for synchronizing data between terminals in an embodiment of the present invention.

### Detailed Description of the Invention

Embodiments of the present invention provide a method and an apparatus for synchronizing data between terminals.

In embodiments of the present invention, a user interacts with a PIM server through a terminal that corresponds to an access mode to update the data on the PIM server. After the user connects to the PIM server through a terminal that corresponds to other access modes, the PIM server sends a notification message to terminals that correspond to other access modes in time. The terminal that receives the preceding notification message and the PIM server perform data synchronization.

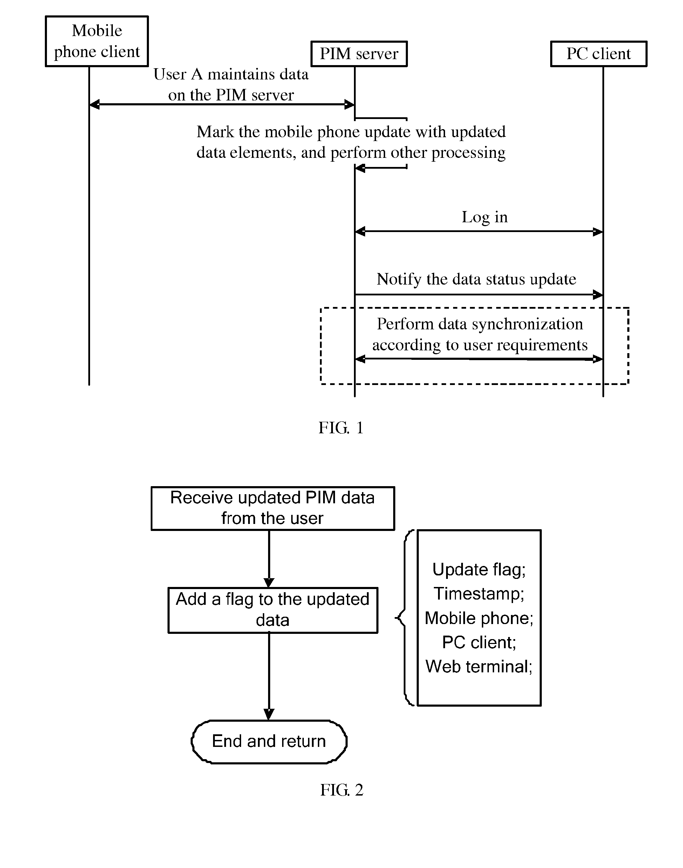

FIG. 1 shows a specific process of a method provided in an embodiment of the present invention. The process includes the following steps:

Step 1-1: The user connects to the PIM server through a mobile phone, synchronizes the data between the mobile phone and the PIM server, and updates the PIM data on the PIM server. The process of synchronizing the data between a mobile terminal (for example, a mobile phone) and the PIM server by the user may be implemented over a SyncML synchronization protocol.

The SyncML synchronization protocol defines a data flow during the session of data synchronization, handshake process of the terminal and the PIM server, and type of data synchronization. The SyncML synchronization protocol also defines the format of messages transferred between entities in the data synchronization; that is, it defines the format of messages transferred between a terminal and the PIM server.

The SyncML synchronization protocol includes the following seven synchronization modes:

1. Bidirectional synchronization: It indicates that a client and a server synchronize respective updated data to each other.

2. Slow synchronization: It belongs to the bidirectional synchronization mode. In slow synchronization mode, the client and the server send their respective data to each other, and compare and synchronize the data items one by one. This mode may take a long time.

3. Unidirectional synchronization on the client: The client sends updated data to the server, but the server does not send updated data to the client.

4. Refresh synchronization on the client: The client sends all the data to the server to replace all the data on the server.

5. Unidirectional synchronization on the server: The server sends updated data to the client, but the client does not send updated data to the server.

6. Refresh synchronization on the server: The server sends all the data to the client to replace all the data on the client.

7. Synchronization notification by the server: The server notifies the client of starting a specific type of synchronization with the server.

Steps 1-2: This embodiment of the present invention needs to store the association between such information as updated PIM data, access mode for updating, updating time, and terminal notification flag on the PIM server. In this step, the PIM server handles the process in which the user updates the PIM data. As shown in FIG. 2, the process is as follows:

All access modes that correspond to each user are set on the PIM server. For example, a user has three access terminals: mobile phone, PC client, and web terminal.

After performing the data synchronization, the PIM server queries the preset all access modes that correspond to each user, and obtains all access modes that correspond to a user who connects to the PIM server through a mobile phone.

This embodiment of the present invention improves the storage format of PIM data on the PIM server; that is, it stores updated information and terminal notification flag information for a PIM data item.

Table 1 shows a storage structure of PIM data on the PIM server.

**Table 1**

| Name | Data Type | PIM Data | Update Flag | Timestamp | Terminal Notification Flag | | |
|---|---|---|---|---|---|---|---|
| | | | | | Mobile Phone | PC Client | Web Terminal |
| User A | Phonebook | 1391234567 | Mobile Phone | 06-01-05 | 0 | 1 | 1 |
| User B | Phonebook | 1393216547 | PC Client | 06-02-04 | 1 | 0 | 1 |
| User C | Schedule | | | | | | |

The update flag, timestamp, and terminal notification flag fields are new fields.

The update flag field indicates the mode in which the PIM data is updated, and may be set to terminal or access mode. For example, if the update flag field is set to mobile phone, the PIM data is updated through a mobile phone.

The timestamp field indicates the time when the PIM data is updated.

The terminal notification flag field indicates whether terminals that correspond to each access mode of the user need to be notified with sending a message. Because the preceding update flag field indicates that the PIM data was updated by the terminal or access mode, the terminal or the terminal corresponding to the access mode does not need to be notified with sending a message. However, because terminals that correspond to other access modes did not perform data synchronization, the terminals need to be notified with sending a message. After a notification message is sent to a terminal, it is necessary to set the terminal notification flag of the terminal to indicate that it is unnecessary to send a notification message.

In Table 1, "1" indicates that it is necessary to send a notification message, and "0" indicates that it is unnecessary to send a notification message. Thus, when the user updates the PIM data on the PIM server through a mobile phone, the PIM server sets the terminal notification flag that corresponds to the mobile phone to "0", which indicates that no notification message needs to be sent when the user logs in to the PIM server through the mobile phone next time. The PIM server sets the terminal notification flag that corresponds to the PC client and web terminal to "1", which indicates that a notification message needs to be sent when the user logs in to the PIM server through the PC client and web terminal next time.

After a notification message is sent to a terminal, the PIM server needs to set the terminal notification flag that corresponds to the terminal to "0".

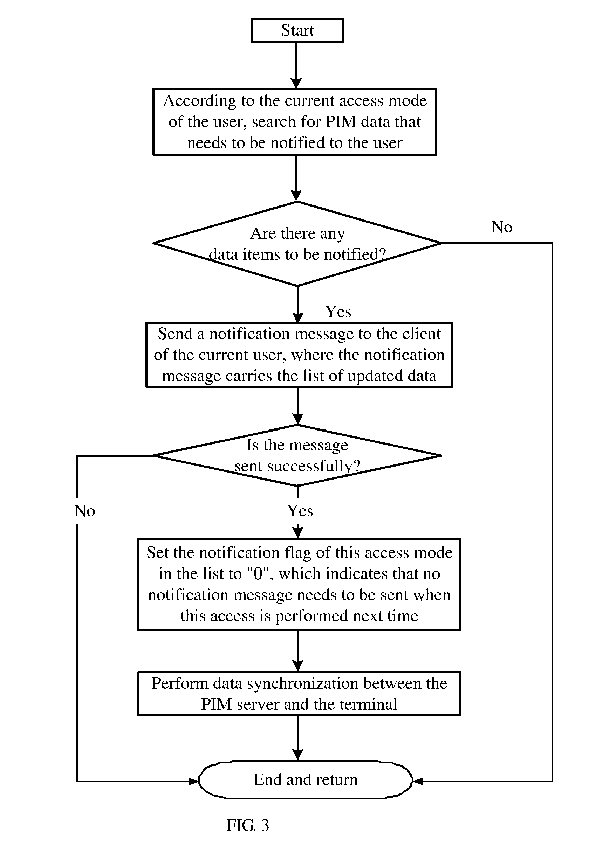

Steps 1-3: When the user re-logs in to the PIM server through terminals corresponding to other access modes, the PIM server performs synchronization. As shown in FIG. 3, the process is as follows:

After the user logs in to the PIM server through the PC client, the PIM server may, according to the current access mode of the user, query the association between such information as updated PIM data, access mode for updating, updating time, and terminal notification flag, which is stored on the PIM server, and obtain a terminal notification flag of a terminal that corresponds to the current access mode of the user. The PIM server judges whether there are data items that need to be notified to the terminal that corresponds to the current access mode of the user according to the terminal notification flag.

If there are data items that need to be notified to the terminal that corresponds to the current access mode of the user, the PIM server sends a notification message to the terminal that corresponds to the current access mode of the user, where the notification message carries index information of data that needs to be updated. When the terminal that corresponds to the current access mode of the user is a mobile phone, the PIM server may send the notification message in PUSH mode.

When the notification message is sent and the terminal that corresponds to the current access mode of the user receives the notification message, the terminal performs data synchronization with the PIM server according to the index information of data that needs to be updated, obtains data from the PIM server, and updates local data. Then, the terminal sends a notification response message to the PIM server.

After receiving the notification response message, the PIM server updates the information of access mode and the terminal notification flag that corresponds to data that needs to be updated, and sets the terminal notification flag to "0", indicating that the notification message does not need to be sent.

The data structures of the preceding notification message PIM_Notification and notification response message PIM_Response may be in the following extensible markup language (XML) format.

```
     <?xml version="1.0" encoding="UTF-8"?>
     <!-SequenceNO indicates the notification message ID-->
     <!ELEMENT SequnceNO (#PCDATA)>
     <!--Update_sum indicates the total number of updated data items in the current
 notification message-->
     <!ELEMENT Update_sum (#PCDATA)>
     <!--Update_data indicates the list of updated data items in the notification
 message-->
     <!ELEMENT Update_data (#PCDATA)>
     <!-Status indicates whether the notification response message is received
 successfully. "200" indicates that the notification response message is received
 successfully. -->
     <!ELEMENT Status (#PCDATA)>
     <!--Update_data attribute list: Index indicates the current data index; timestamp
 indicates update time; and Update_Method indicates update of data access modes, which
 may be mobile phone, PC client or web client. -->
     <!ATTLIST Update_data
        Index ID #REQUIRED
        timestamp CDATA #REQUIRED
        Update_Method (mobile phonel PC client | web client) #REQUIRED
     >
     <!--PIM_Notification indicates the structure of the notification message-->
     <!ELEMENT PIM_Notification (SequnceNO, Update_sum*, Update_data)>
     <!ELEMENT PIM_Response (SequnceNO, Status)>
```

The server may send a notification message to the client. The following is an embodiment of the notification message in the XML format:

```
     <?xml version="1.0" encoding="UTF-8"?>
     <!-- edited with XMLSPY v5 rel. 4 U (http://www.xmlspy.com) by Registred
 (Registred) -->
     <PIM_Notification>
        <SequnceNO>1</SequnceNO>
        <Update_sum>2</Update_sum>
        <Update_data Index="0001" timestamp="2007-06-13 14:20" Update_Method="
 Mobile phone"/>
        <Update_data Index="0002" timestamp="2007-06-13 14:20" Update_Method="
 Mobile phone"/>
     </PIM_Notification>
```

The PIM_Notification notification message, with the sequence number of "1", is used to notify the current user of two data items that need to be updated. The two data items are as follows: data with index 0001, which is updated in mobile phone access mode at 14:20 on June 13, 2007; and data with index 0002, which is updated in mobile phone access mode at 14:20 on June 13, 2007.

The client of the user may send a notification response message to the PIM server. The following is an embodiment of the notification response message in the XML format.

```
     <?xml version="1.0" encoding="UTF-8"?>
     <!DOCTYPE PIM_Response SYSTEM "C:\Documents and
 Settings\yangjian\Desktop\PIM_Notification.dtd">
     <PIM_Response>
        <SequnceNO>1</SequnceNO>
        <Status>200</Status>
     </PIM_Response>
```

The client returns a notification response message, where the notification response message carries the sequence number of the notification message and a status code (200) indicating that the client receives the notification message successfully.

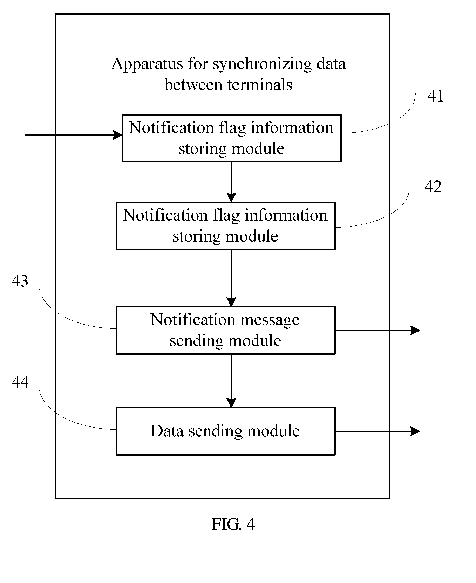

FIG. 4 shows a structure of an apparatus for synchronizing data between terminals in an embodiment of the present invention. The apparatus includes a data receiving module 41, a notification flag information storing module 42, a notification message sending module 43, and a data sending module 44.

The data receiving module 41 is adapted to: receive data that a user sends to a server through a terminal corresponding to a certain access mode, and update data on the server, where the data may be PIM data.

The notification flag information storing module 42 is adapted to store an association between the received data and terminal notification flags that correspond to each access mode of the user. The association between such information as updated PIM data, access mode for updating, updating time, and terminal notification flag needs to be stored on the server. The notification flag corresponding to the preceding access mode in which the user sends data indicates that no notification message needs to be sent, and the notification flags corresponding to other access modes of the user indicate that notification messages needs to be sent.

The notification message sending module 43 is adapted to send a notification message. Specifically, after the user connects to the server through terminals corresponding to other access modes, the server queries the association between such information as updated PIM data, access mode for updating, updating time, and terminal notification flag, and obtains the terminal notification flag that corresponds to the current access mode of the user. The server judges whether there are data items that need to be notified to the terminal that corresponds to the current access mode of the user according to the terminal notification flag. If there are data items that need to be notified, the notification message sending module 43 sends a notification message that carries the index information of the received data to the terminals corresponding to the current access mode.

The data sending module 44 is adapted to perform information interaction with the terminals corresponding to other access modes of the user, and send the data that corresponds to the index information to the terminals corresponding to other access modes of the user.

The apparatus may be configured on a PIM server.

In conclusion, embodiments of the present invention send a notification message to a terminal of a user through a server to instruct the terminal of the user to perform data synchronization. Thus, when the user sends data to the server through a terminal that corresponds to a certain access mode, terminals that correspond to other access modes of the user can know the data status on the server and perform data synchronization in time. Data conflicts between various access terminals of the user may be avoided.

Through the preceding description of embodiments of the present invention, it is understandable to those skilled in the art that embodiments of the present invention may be implemented by hardware or software in combination with a necessary hardware platform. Thus, the technical solution of the present invention may be made into software. The software may be stored in a non-volatile memory medium (for example, CD-ROM, U disk, and mobile hard disk), and include several commands that instruct a computer device (PC, server, or network device) to perform the methods provided in each embodiment of the present invention.

Although the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for synchronizing data between terminals, comprising:
receiving, by a server, data that a user sends through a terminal corresponding to a certain access mode; and
sending, by the server, a notification message to other terminals of the user, and providing the other terminals with the data.

2. The method of claim 1, wherein the other terminals of the user comprise terminals of other access modes of the user or other terminals of a certain access mode of the user.

3. The method of claim 1, wherein after the server receives the data and before the server sends the notification message, the method further comprises:
storing, by the server, the data and the corresponding relationship between the data and all access modes of the user.

4. The method of claim 3, wherein the process of storing the corresponding relationship between the data and all access modes of the user by the server comprises:
after receiving the data, by the server, querying all access modes that correspond to each user, and obtaining all access modes that correspond to the user sending the data; and
storing, by the server, an association between the data and notification flags that correspond to all access modes of the user, wherein a notification flag corresponding to a current access mode of the user indicates that there is no need to send a notification message, and notification flags corresponding to other access modes of the user indicate that there is a need to send a notification message.

5. The method of claim 3 or 4, wherein the process of sending the notification message to terminals corresponding to other access modes of the user by the server and obtaining the data by the terminals corresponding to other access modes through the server comprises:
when the user connects to the server through the terminals corresponding to other access modes, by the server, querying the stored corresponding relationship between the data and all access modes of the user, and obtaining data information corresponding to other access modes that needs to be notified; and
sending, by the server, a notification message that carries index information of the data information that needs to be notified to the terminals corresponding to other access modes; and
after receiving the notification message, by the terminals corresponding to other access modes, obtaining data that corresponds to the index information provided from the server, and updating the data.

6. The method of claim 5, further comprising:
updating, by the server, notification flags that correspond to other access modes, wherein the updated notification flags indicate that there is no need to send the notification message.

7. The method of claim 5, further comprising:
receiving, by the server, a notification response message from the terminals corresponding to other access modes.

8. An apparatus for synchronizing data between terminals, comprising:
a data receiving module, adapted to receive data that a user sends to a server through a terminal corresponding to a certain access mode;
a notification message sending module, adapted to send a notification message to other terminals of the user when the user connects to the server through other terminals; and
a data sending module, adapted to send data that the data receiving module receives to other terminals of the user.

9. The apparatus of claim 8, wherein other terminals of the user comprise terminals of other access modes of the user or other terminals of a certain access mode of the user.

10. The apparatus of claim 8, further comprising:
a notification flag information storing module, adapted to store an association between the received data and notification flags that correspond to all access modes of the user, wherein a notification flag corresponding to an access mode in which the user sends the data indicates that there is no need to send a notification message, and notification flags corresponding to other access modes of the user indicate that there is a need to send a notification message.

11. The apparatus of claim 8 or 9, wherein: the notification message sending module sends a notification message that carries index information of the received data to terminals corresponding to other access modes of the user, and the data sending module sends data that corresponds to the index information to terminals corresponding to other access modes of the user.

12. The apparatus of claim 8 or 9, wherein the apparatus is configured on a personal information management (PIM) server.
